Europäisches Patentamt

European Patent Office

Office européen des brevets

(19)

(11) Publication number: **0 251 006**
**A1**

(12) **EUROPEAN PATENT APPLICATION**

(21) Application number: **87108575.9**

(22) Date of filing: **13.06.87**

(51) Int. Cl.³: **A 47 J 37/06**
**C 07 C 67/10, A 47 J 37/07**
**F 24 B 1/182, F 24 B 1/192**

(30) Priority: **26.06.86 IT 8255086**

(43) Date of publication of application:
**07.01.88 Bulletin 88/1**

(84) Designated Contracting States:
**AT BE CH DE ES FR GB LI NL**

(71) Applicant: **OLIVOTTI, Elia**
**V.le F.lli Bandiera No 13**
**I-31100 - Treviso(IT)**

(72) Inventor: **OLIVOTTI, Elia**
**V.le F.lli Bandiera No 13**
**I-31100 - Treviso(IT)**

(54) **Apparatus and method for barbecueing with wood and carbon embers.**

(57) An apparatus for and method of cooking and barbecueing by using chercoal or wood, said apparatus consisting of a closed oven space provided at the front with a raisable blind of thermal glass and with improved means for circulating combustion air.

FIGURA 3

Description of the Invention entitled:

0251006

# APPARATUS AND COOKING METHOD FOR BARBECUEING WITH WOOD AND CARBON EMBERS; ODOURLESS, SMOKELESS, DECORATIVE

In the name of ELIA OLIVOTTI, resident in Treviso, Viale F.lli Bandiera 13, of Italian nationality. Deposited on 27/6/1986, no.82550/86

Summary: this document deals with a barbecue oven with a front wall of crystal which can be raised and which carries out wood ember barbecuing of superior quality.

The innovation consists of the following: in having eliminated from the environment smoke and odours which permeate it with present systems, and also the elimination of smoke outside. It does away with the constant presence of the cook and gives better results regarding the perfection of cooking; it browns without burning, reduces the consumption of wood by 50%, is quickly lit, quickly produces embers, thus rendering it possible to cook with wood embers indoors.

Figure 3 of the enclosed designs is the clearest of the object under discussion; in figure 3/C1-C2 is the front wall, which operates like a blind and is in crystal; in figure 3/H2 air entry point for the primary combustion in the combustion chamber;

in figure 3/H3 secondary air entry point; in figure 3/H1 regulating ash-pan for lower draught; in figure 3/E the raisable barbecue with levers. F-F3.

## DESCRIPTION

Barbecue cooking, universally preferred both for dietetic reasons and also because it gives more flavour to the food cooked, has up to now been carried out with primitive methods which carry on the same because there have been no innovations bfore the present invention herein described; at present the fallowing disadvantages with the traditional type of barbecue should be noted:

lighting of wood or carbon, commonly used to make embers, whether for cooking or in the fireplace, is at present slow and smoky, especrially so if hhe wood is not dry; it requires the help of fans and bellows and leads easily to a smoky environment as smoke leaves the fireplace and chimney. The smoke which condenses in the chimney, because of imperfect combustion, leads to greasy deposits of soot which, falling during cleaning, dirties the environment.

As regards the invention herein described, lighting is immediate and without fans or bellows, whether of wood or carbon. Smoke caused during lighting is eliminated both inside the apparatus and outside in the environment, and dirtying is excluded. No greasy smoke is caused, only a little dry dust which, with the ashes, is gathered in the ash-pan without spreading around; wood which is not dry burns in exactly the same way.

Up to now, barbecueing meat and fish makes it impossible for the cooking to be carried out indoors due to odours and smoke; with the invention herein described, cooking can be carried out either in the kitchen or lounge.

Barbecueing with wood embers in restaurants is not practical because it means that customers have to wait a long time, as the formation of embers is slow; or it means that a large quantity of wood embers are not used. The wood is placed in a cage, from which the embers are removed little by little when they become ready for the barbecue. As they give off discontinual heat, which is excessive at the beginning, and then too little because of quick cooling, they require constant attention and sifting. The meat, too, requires constant turning in order to avoid burning because of the fat which drips and provokes flames; the heat which is given off is unhealthy for the cook.

When the embers are not properly lit, smoke is given off under the heat, which affects the taste negatively. Often, in place of wood embers, it is necessary to fall back on a gas flame under a block of volcanic stone; as a result, both the flames and combustion permeate the cooking. With these systems gutter barbecues are used, with the minimum interval for the retrieval of fats which, dripping down, cause high flaming and damage to the cooking. In this way, grid rather than barbecue cooking is the result.

Cooking requires a large cowl, with mechanical suction because of smoke and vapour that are emitted.

The invention herein described allows for the quick production of wood embers in 20/30 minutes, according to size, and in ten minutes if carbon is used, from the time of lighting.

It is not necessary to have an exhaling cowl in the kitchen, not is it necessary either to check the fire, because the combustion chamber is loaded once only with wood, and the embers are formed uniformly without brands left as residue; moreover, the embers last a long time, until cooking time is finished, giving off a uniform heat. It is not necessary to control the process and maximum results are given with regard to taste and browning without burning.

Cooking of chicken and the like is virtually automatic because the height of the grill

0251006

from the embers can be regulated from outside the oven. This permits the use of a grill with thin rods, rather than of the gutter type, in order to obtain a complete browning and also avoiding the flames provoked by the fats reaching the meat.

Because the heat given off is limited by the crystal blind, the cook is not affected.

In previous methods, there is always the danger of embers jumping out of the barbecue area. Also, the heat which expands in the environment rises, whilst a current of cold air is provoked and which moves at floor level because of the aspiration of the cowl; so much so that it is necessary to close the draught when combustion is over. The firedogs constitute a serious obstruction.

In the invention described herein the barbecue oven, aspirating only the air required for combustion, sends the whole of the external heat of the oven into the environment without provoking cold air currents at floor level. It eliminates steam and humidity of the kitchen because it replaces the odour exhaler. It can be installed in the lounge or in the fireplace, combining perfectly cooking and decorative aspects, eliminating odour, smoke, blackening of the environment, soot, and the jumping out of embers from the area of cooking, as it is closed in on every side; obstruction is greatly reduced.

0251006

In previous methods there are disadvantages in the formation of embers. Whether heaped on the firedogs or in the cage, there is a considerable consumption of wood for a large fire which is not used for cooking until embers have been formed. A small fire does not form embers, at the end of cooking time there is the problem of half-lit brands, and blackening of the surrounding area.

The grill itself is encrusted and requires lengthy cleaning before it can be used again. Gas and electric ovens, both at the moment of lighting and after, give off odour because of the evaporation of fats and also require careful cleaning after cooking is finished.

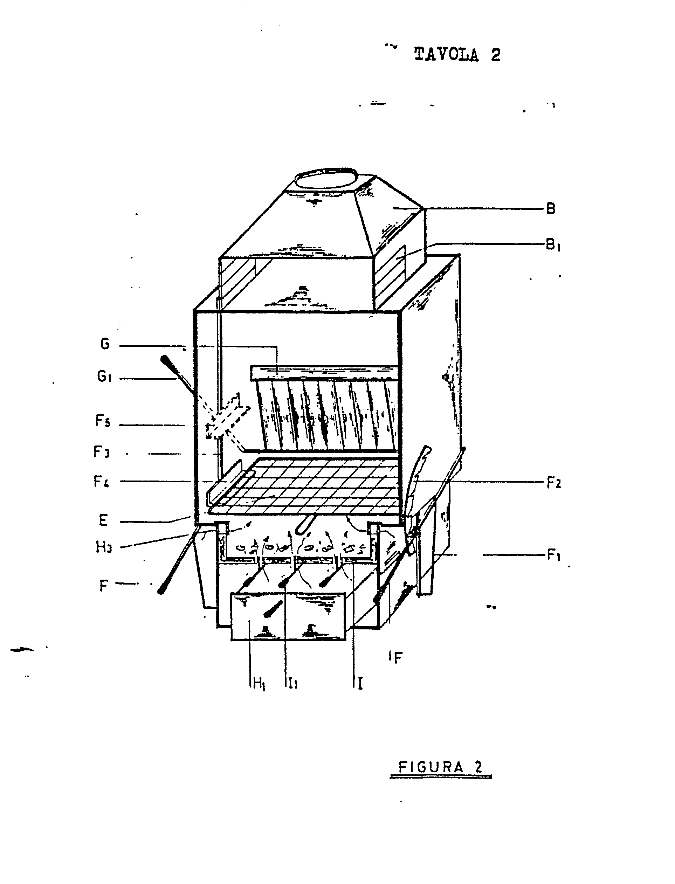

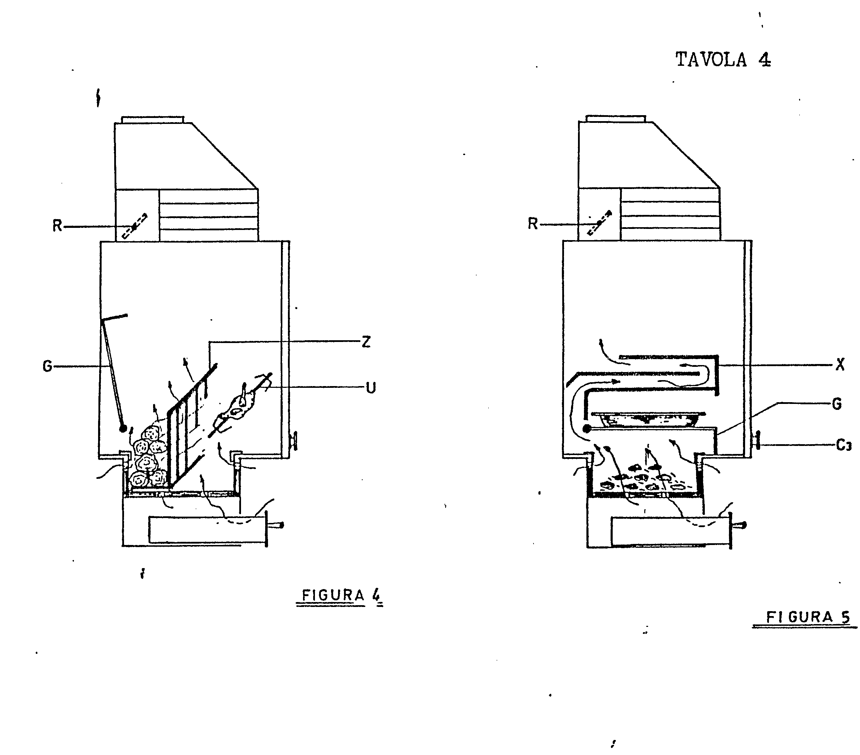

With the invention herein described, once lit, the grill is freed from the encrustations of previous cooking by exposing the grill itself to the the flames; this is carried out by lowering the rotating plate on the combustion chamber (fig.2/G-G1 and fig.5/G). The plate has many elements against deformation and is controlled from outside by a lever (fig.2/G1) which provokes extreme heating. In this way the oven plate of the barbecue can be used as a kitchen range, for different types of cooking whether in pans or saucepans, without smell, as the oven is very hot. A chamber of distillation and carbonization of the wood is formed below the plate for the formation of the embers. The flames rise from the end of the plate which is at a distance from the back wall (fig.5).

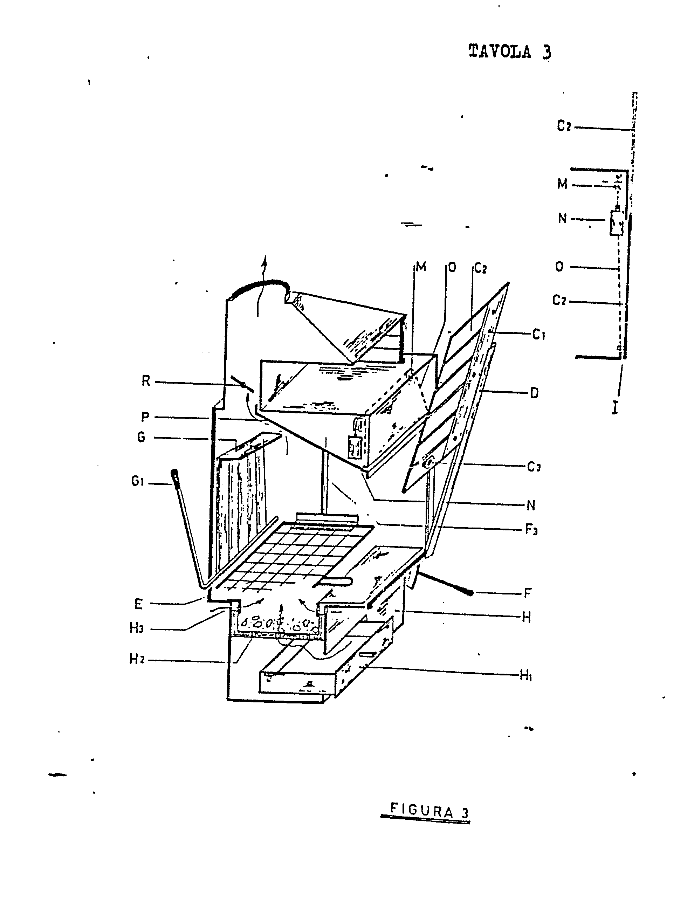

Once the wood is totally alight the ash-pan is closed (fig.3/H1) until combustion is eliminated only from the upper holes (fig.3/H3) in order to form embers uniformly and deeply throughout the thickness of the wood, without brands, so that the wood retains its shape whilst the embers are formed. This means that, under the same conditions, the consumption of wood is reduced by 50%.

This is because the combustion chamber is well-shaped, with primary combustion air coming from the bottom and secondary combustion air from the upper holes, and also because of its resistant covering which makes sure that no wood is not lit, which so often happens when it is heaped on the firedogs of the fireplace.

As dispersion of heat is reduced, the embers last a long time, and therefore constant heat is assured for excellent cooking results.

0251006

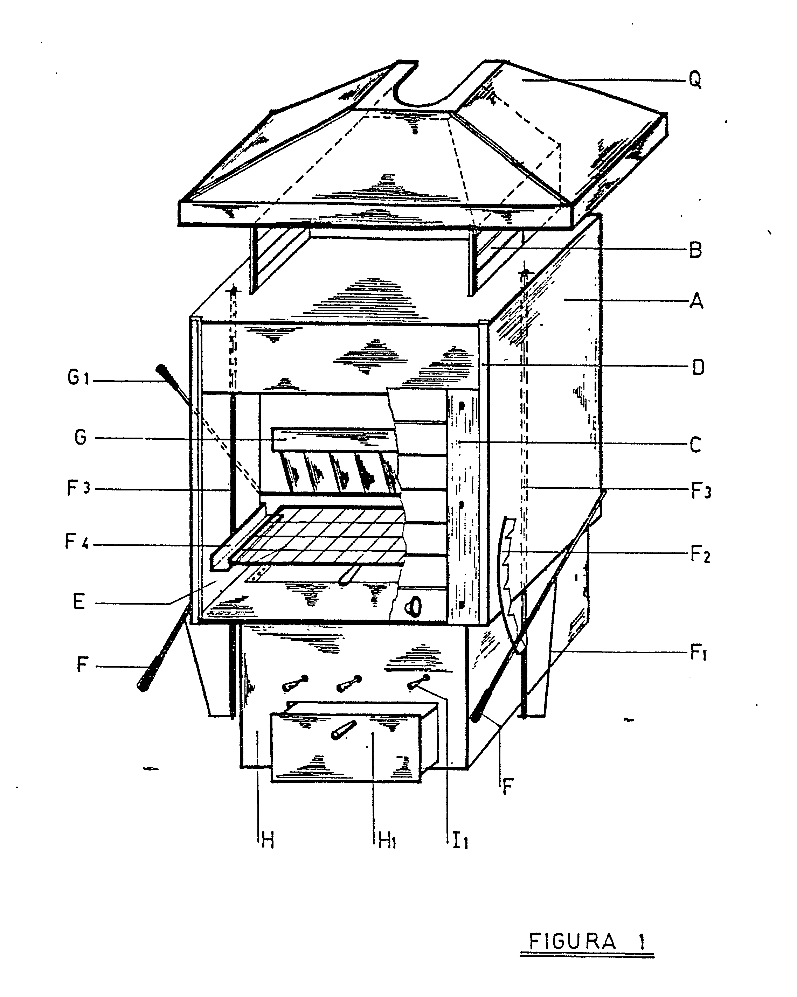

Purely by way of illustration, the invention can: be
described as a special apparatus of barbecue oven,
placed at the most convenient height for the cook,
with both frontal (fig.1) and side views (fig.3),
made up of a main structure (fig.1/A) and a combustion
chamber (fig.3/H).

The oven is closed on all sides and can be opened at
the front by means of a crystal blind which can be
raised (fig.1/C) and also slid along rails by means of
counterweights (fig.3/C1-C2-D-M-N); these are made of
thermal crystal and ordinary glass in strips so as to
provide greater resistance to the heat, with spaces
between each one which allows the passage of air. This
helps to keep clean the windows which are inserted into
a frame which can be opened externally in order to clean
and change the windows (fig.3).The deflector I4(fig.3) direc
ie aspirated air from the hole upwards,in order to keep the glass clean (c2
The detail in fig.3 shows the mounting of the windows
in the frame which, hinged on the bottom (fig.3) opens
externally.

The latch opening of the blind gives easy access to the
oven grill so that the fuel can be placed in the
combustion chamber underneath (fig.3/H) and the grill can be prepared for the cooking procedure. When the blind is lowered, all of the draught of the chamber underneath is involved, (fig.3/H2) thus leading to quicker combustion, whilst excessive heat which could affect the cook is stopped. When the blind is raised, steam and odour is sucked out of the environment.

The cobustion chamber is entirely covered in resistant material or clay of isolation type, at the sides and on the bottom. When the glass blind is closed the combustion air of the draught passes through three lower holes (fig.3/H2); when it is open the ash-pan (fig.3/H1) is, together with the former, a regulator of the air.

Air is sucked through the upper holes of the combustion chamber (fig.3/H3) in order to achieve combustion of the upper layer of wood or of the tarry gas which occurs with superficial combustion. A brilliant luminous flame without smoke ensures that there is no greasy soot.

The draught air, passing through the few slots underneath the cobustion chamber, and the upper holes, exerts a strong blowing effect which leads to quick lighting without smoke, neither at the beginning nor during combustion, nor through the discharge valve outside the chimney, because of the effect of total cobustion.

0251006

Cleaning of the slots of air is shown in (fig.1/I1 and fig. 2/I1).

The second draught regulator is shown in (fig.3-4-5:R).

Whilst an isolated piece of wood on limaogs gives off smoke or tends to go out, if placed in the special combustion chamber it burns completely with a bright flame and without smoke. The combustion chamber is, in effect, an incinerator.

Its construction, whether in steel plating rather than in fusion, has a secondary internal protection in steel plating in strips which guards against deformation (fig.1/A) of the external steel sheeting.

Uniformity and duration of the embers at a constant heat and long time is permitted by the reduction at the same time of all the wodd in the combustion chamber to embers. The combustion chamber is isolated by its covering in refractary material.

Burning is thus avoided, and perfect browning is obtained because of the continual heat at constant temperature; adjustments or additions of fuel are at no time in the cooking process necessary.

Further, in order to regulate cooking in relation to the heat of the embers and to avoid the constant presence of the cook, the grill itself can be raised to various levels
(fig.1-2-3/F-F1-F2-F3-F4-F5), given that the cooking
of chicken and the like is virtually automatic and
requires minimum checking on the part of the cook.
Once the chicken is placed on the double grill,
cooking begins by keeping the grill on the highest
levels; for 20 to 25 minutes no checking is necessary.

Equally, after the grill is turned over and placed on
the lowest levels for a further 20 to 25 minutes,
checking is again not required, and the result is
perfect browning without burning.

Cooking is, indeed, improved because heat ﬁﬆﬀﬆ reaches
the meat not only from the embers but also from the
interior of the oven, given that the glass blind is
closed.

The well-shaped combustion chamber in refractary material
reduces heat dispersion and, through one single loading
of wood at the beginning of the cooking process, ensures
small consumption and long duration of embers so that
cooking can be carried out with continual heat at
constant temperature without further fuel addition.

In fact, 3 to 4 kilos of wood supply continually and
without further additions 40-50 minutes of flames in order
to heat saucepans on the lowered plate, for polenta, without smell given the elimination of all odour, plus 50-60 minutes of embers for barbecue cooking, after the plate has been raised. If carbon is added the duration of the embers can be prolonged as long as is required.

Smoke from the cooking meat is destroyed by the heat of the embers together with the air coming out of the upper holes of the oven, and also because of the high interior temperature of the oven which is closed on all sides and which ensures, through the chimney suction, that nothing is exhaled into the environment.

This makes it possible to place the barbecue in the dining room, and therefore close at hand, in order to avoid cooling of the crisply cooked meat.

The oven can also be used to brown bechamel sauces, lasagnes and pizzas by directing heat from above rather than from below.

To this end, with the plate lowered (fig.5/G) and a deflector introduced (fig.5/X), the flames coming from behind the plate move in the direction of the horizontal chimney in which the heated steel plate radiates theheat downwards, and therefore browns the top of the lasagnes.

It can also be used for spit cooking. In this case, there is a trellis (fig.4/Z) which holds back the wood, thereby keeping the flames away from the spit, which receives the heat by means of radiation of the wood being combusted.

The *xxxd* cowl is shaped in such a way that it can also be used for heating foods (fig.1/2-B-B1), as an auxiliary oven and as a biscuit oven.

0251006

## CLAIMS

1) Apparatus and method of combustion applied to a barbecue oven for cooking with wood or carbon embers, and excluding all types of exhalations or smoke into the environment, blackening with greasy soot, and also providing a saving of 50% of the consumption of wood. Embers are quickly produced and cooking on a barbecue indoors, with outh exhalations, is therefore possible.

The apparatus is made up of the following elements: an oven with chimney, closed on all sides with a raisable blind of thermal glass in the front (fig.3/C2), with counterweights; it can also be opened externally so that the windows with frame can be cleaned. There is an ash-pan at the bottom (fig.3/D) and also a combustion chamber for the fuel in a well shape, in refractory material or clay, in which the combustion air passes through the ash-pan, which also serves as draught regulator through 3 slots at the bottom for primary combustion (fig.3/H2)

0251006

and through holes at the top for secondary combustion
(fig.3/H3). This ensures quick lighting, bright flame,
smokeless, burning the tarry gas at the beginning and
during the combustion of the wood without greasy soot
forming or smoke coming out of the external chimney.

2) Apparatus described above in which the consumption
of wood, in comparison with previous inventions,
is reduced by 50%, as the combustion chamber described
above can be closed by the lowering of a rotating
plate (fig.3/G-G1 and fig.4/G) controlled from outside.
This forms a distillation and carbonization chamber for
the wood underneath, thus leading to uniformity in the
embers without leaving parts unburnt in part in. the fuel.
When the plate is raised the embers last a long time,
until the cooking process is finished, supplying a uniform
and constant heat without further fuel being added or
the fire controlled because of reduced dispersion of the
heat. When the plate is lowered the oven becomes very
hot and functions as a kitchen range for odourless cooking
in saucepans, whilst embers are formed underneath by
the combusted wood and the resulting heat is utilized.

So when the plate is raised the cooking has excellent taste because of the uniform and intense heat.

3) Apparatus described above with which, because of the uniformity of the heat given by the embers without smoke and with long duration, automatic browning takes place without burning and with minimum supervision, given the height variation of the grill, which can be controlled by an external lever (fig.2/F) at different levels (fig.2/F2). Cooking on a barbecue grill with thin rods is carried out, rather than on a gutter type grill which gives imperfect cooking results.

4) Apparatus described above in which the heat, through radiation of the combustion, is directed upwards from the top to the bottom with the deflector which gives a horizontal direction to the flames when the glass blind and the plate are lowered, in order to obtain the gratin or browning required (fig.5/X).

5) Apparatus described above in which, for spit cooking, the cage (fig.4/ ) is applied inside the combustion chamber in order to keep the wood stacked up at a distance, thus obtaining uniformity of combustion and constancy of the heat radiated by the lit wood.

0251006

6) Apparatus described abovein which the upper part of the oven is cowl-shaped so that an auxiliary heating chamber or biscuit oven is formed (fig.2/B-B1).

7) Apparatus described above, uniting all the elements and requisites which are shown in the descriptions and designs mentioned above.

FIGURA 1

TAVOLA 2

FIGURA 2

TAVOLA 3

FIGURA 3

R

G

Z

U

FIGURA 4

R

X

G

C₃

FIGURA 5

0251006

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | FR-A-2 542 849  (TELEC 2000)<br>* Whole document * | 1 | A 47 J   37/06<br>A 47 J   37/07<br>F 24 B    1/182<br>F 24 B    1/192 |
| X | FR-A-2 512 932  (CHEMINEES PHILIPPE)<br>* Whole document * | 1 | |
| X | GB-A-2 143 317  (SILVESTER)<br>* Whole document * | 1 | |
| X | FR-A-  330 356  (LABESSE ET LENOIR)<br>* Whole document * | 1,3,6 | |
| A | FR-A-2 132 681  (FAUSER)<br>* Whole document * | 1-6 | **TECHNICAL FIELDS SEARCHED (Int Cl 4)** |
| A | FR-A-2 454 786  (TIMOTEO)<br>* Whole document * | 2 | A 47 J<br>F 24 B |
| A | GB-A-  256 340  (PASCALL)<br>* Page 1, lines 5-12; page 2, lines 105,106; figure 3 * | 1,2 | |
| A | US-A-3 455 233  (CABLE)<br>* Column 3, lines 49-67; figure 1 * | 3 | |
| | --- -/- | | |

The present search report has been drawn up for all claims

| Place of search | Date of completion of the search | Examiner |
|---|---|---|
| THE HAGUE | 07-10-1987 | SCHARTZ J. |

**European Patent Office**

## EUROPEAN SEARCH REPORT

| | DOCUMENTS CONSIDERED TO BE RELEVANT | | Page 2 | |
|---|---|---|---|---|
| Category | Citation of document with indication, where appropriate, of relevant passages | Relevant to claim | CLASSIFICATION OF THE APPLICATION (Int Cl 4) | |
| A | US-A-2 211 940 (STONER)<br>* Figure 1; page 1, right-hand column, lines 40-45 *<br><br>----- | 1 | | |
| | | | **TECHNICAL FIELDS SEARCHED (Int Cl 4)** | |

The present search report has been drawn up for all claims

| Place of search | Date of completion of the search | Examiner |
|---|---|---|
| THE HAGUE | 07-10-1987 | SCHARTZ J. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82